(19) Europäisches Patentamt
European Patent Office
Office européen des brevets

(11) EP 3 327 042 B1

(12) **EUROPEAN PATENT SPECIFICATION**

(45) Date of publication and mention of the grant of the patent:
**05.06.2019 Bulletin 2019/23**

(21) Application number: **16841121.3**

(22) Date of filing: **30.08.2016**

(51) Int Cl.:
***C08C 19/25*** *(2006.01)* ***B60C 1/00*** *(2006.01)*
***C08K 3/04*** *(2006.01)* ***C08K 3/36*** *(2006.01)*
***C08L 9/06*** *(2006.01)* ***C08L 15/00*** *(2006.01)*

(86) International application number:
**PCT/JP2016/003959**

(87) International publication number:
**WO 2017/038087 (09.03.2017 Gazette 2017/10)**

# (54) EMULSION-POLYMERIZED STYRENE-BUTADIENE RUBBER, RUBBER COMPOSITION, AND TIRE

EMULSIONSPOLYMERISIERTER STYROL-BUTADIEN-KAUTSCHUK, KAUTSCHUKZUSAMMENSETZUNG UND REIFEN

CAOUTCHOUC STYRÈNE-BUTADIÈNE POLYMÉRISÉ EN ÉMULSION, COMPOSITION DE CAOUTCHOUC, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2015 JP 2015172337**

(43) Date of publication of application:
**30.05.2018 Bulletin 2018/22**

(73) Proprietor: **Bridgestone Corporation**
**Tokyo 104-8340 (JP)**

(72) Inventor: **TANAKA, Takatsugu**
**Tokyo 104-8340 (JP)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**WO-A1-2009/113546**
**WO-A1-2014/040640**
**CN-A- 102 432 927**
**JP-A- 2008 195 923**
**JP-A- 2012 111 799**
**JP-A- 2012 172 137**
**JP-A- 2013 510 925**
**US-A1- 2014 371 383**
**US-A1- 2015 148 477**
**US-B1- 9 090 730**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

This disclosure relates to an emulsion polymerized styrene-butadiene rubber, a rubber composition and a tire.

BACKGROUND

Conventionally, achievement of both wear resistance and low loss property, between which there is a tradeoff, has been required in a rubber composition used in a tire or other products. Known as a method for solving such tradeoff is a method decreasing a particle size of a reinforcing filler in order to ensure high reinforcement performance and excellent wear resistance, and a method increasing a filling amount of a reinforcing filler.

However, although the aforementioned methods are capable of improving the reinforcement performance, since a hysteresis loss is increased simultaneously, they are not methods achieving both the wear resistance and the low loss property.

Here, known is a technique improving an interaction of a filler and a rubber by improving a rubber component. For example, PTL1 discloses a rubber composition for tire tread, which has a weight-average molecular weight of 900,000 to 1,500,000, and is obtainable by compounding 60 to 110 parts by mass of a silica satisfying specific conditions, and compounding a mixture of a fatty acid metallic salt (except for zinc salts) and a fatty acid ester at an amount of 2 to 8 mass% with respect to the silica, per 100 parts by mass of a diene based rubber containing 40 parts by mass or more of a solution polymerized styrene butadiene copolymer rubber with a styrene content of 35% to 45%.

However, in the technique of PTL1, since a solution polymerized styrene-butadiene rubber is used as a rubber component, there are problems such as deterioration of processability, and heavy environmental load due to an organic solvent used during manufacture.

Other than the solution polymerized styrene-butadiene rubber, emulsion polymerized styrene-butadiene rubbers are widely used as a rubber composition for tire as well. Emulsion polymerized styrene-butadiene rubber has the advantage of a stable microstructure, and the advantage of processability and particularly excellent wear resistance due to a wide molecular weight distribution. Moreover, emulsion polymerization is a method capable of polymerizing a polymer in water, and thus has low load to the environment and extremely low danger of ignition and explosion. WO 2014/040640 A1 discloses modified macromolecular compounds obtainable by using specific amino silane polymerization initiator compounds and optionally chain end-modifying compounds. Further disclosed are polymer compositions comprising such modified macromolecular compounds and their use in in preparing vulcanized elastomeric polymer compositions.

CITATION LIST

Patent Literature

PTL1: JP2011-246640A

SUMMARY

(Technical Problem)

However, since an emulsion polymerized styrene-butadiene rubber has a microstructure which is difficult to control, and has a reactivity with fillers such as silica which is likely to be deteriorated, further improvement to its low loss property is required.

Moreover, few examples of controlling terminal structure of solution polymerized styrene-butadiene rubbers is known conventionally. Furthermore, we noticed that by introducing a functional group interactive with a filler to an emulsion polymerized styrene-butadiene rubber similarly as the solution polymerized styrene-butadiene rubber, a rubber capable of achieving both the wear resistance and the low loss property can be obtained.

Then, this disclosure aims to provide an emulsion polymerized styrene-butadiene rubber capable of achieving both the wear resistance and the low loss property when used to a tire or other rubber products. Moreover, this disclosure aims to provide a rubber composition capable of achieving both the wear resistance and the low loss property when used to a tire or other rubber products, and to provide a tire capable of achieving both the wear resistance and the low loss property.

(Solution to Problem)

As a result of study for achieving the aforementioned purpose, we accomplished this disclosure by discovering that by performing emulsion polymerization by using a compound containing a thiol, etc. to a functional group exhibiting strong interaction with a filler, specifically, a modified functional group containing a nitrogen atom and having a solubility parameter (SP value) of 9.55 or less obtained with Fedors method, or a modified functional group containing a hydroxyl group and having the SP value of less than 15.00, an emulsion polymerized styrene-butadiene rubber having high wear resistance and excellent low loss property can be obtained.

The styrene-butadiene rubber of this disclosure is an emulsion-polymerized styrene-butadiene rubber synthesizable via emulsion polymerization, comprising at a terminal: a modified functional group containing a nitrogen atom and having an SP value of 9.55 or less; or a modified functional group containing a hydroxyl group and having an SP value of less than 15.00, where the SP values are solubility parameters obtained with a Fedors method.

This configuration is capable of achieving both the wear resistance and the low loss property when used in a tire or other rubber products.

In the styrene-butadiene rubber of this disclosure, it is preferable that the modified functional group containing a nitrogen atom further contains a silicon atom. Moreover, it is more preferable that the modified functional group containing a nitrogen atom contains an alkoxy silyl group and an amino group, the silicon atom being derived from the alkoxy silyl group, and the nitrogen atom being derived from the amino group.

This is because that it is possible to achieve both the wear resistance and the low loss property at a higher degree.

In the emulsion polymerized styrene-butadiene rubber of this disclosure, it is preferable that the modified functional group containing a nitrogen atom further contains a sulfur atom. This is because that it is possible to easily provide the modified functional group to the emulsion polymerized styrene-butadiene rubber.

In the emulsion polymerized styrene-butadiene rubber of this disclosure, it is more preferable that the modified functional group containing a nitrogen atom is represented by any one of the following formulae (1) to (3):

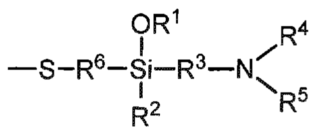

・・・(1)

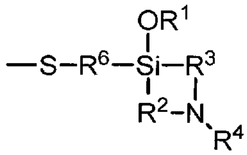

・・・(2)

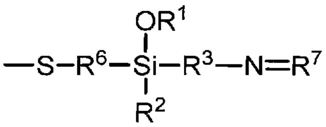

・・・(3)

where each of $R^1$ and $R^6$ is a $C_1$ to $C_{12}$ alkyl group; $R^2$ is a $C_1$ to $C_{12}$ alkyl group or a $C_1$ to $C_{12}$ alkoxy group; $R^3$ is a $C_1$ to $C_{12}$ alkyl group; each of $R^4$ and $R^5$ is a hydrogen atom, a hydrolyzable group, or a group containing an alkylsilane with an alkyl group or an aryl group; and $R^7$ is an alkyl group or a hydrolyzable group.

This is because that it is possible to achieve both the wear resistance and the low loss property at a higher degree.

In the emulsion polymerized styrene-butadiene rubber of this disclosure, it is particularly preferable that the hydrolyzable groups in the formulae (1) to (3) are trimethylsilyl groups.

This is because that it is possible to achieve both the wear resistance and the low loss property at a further higher degree.

In the emulsion polymerized styrene-butadiene rubber of this disclosure, it is preferable that a modifier used to introduce the modified functional group containing a nitrogen atom contains a thiol, and the sulfur atom of the modified functional group is derived from a thiol. This is for the purpose of introducing the modified functional group containing a nitrogen atom more securely.

It is preferable that the emulsion polymerized styrene-butadiene rubber of this disclosure has a number-average molecular weight of 50,000 or more. This is for the purpose of achieving excellent wear resistance.

It is preferable that the emulsion polymerized styrene-butadiene rubber of this disclosure has a molecular weight

distribution of more than 2.5. This is because that it is possible to achieve more excellent wear resistance.

The rubber composition of this disclosure comprises: a rubber component containing the aforementioned emulsion polymerized styrene-butadiene rubber; and 10 parts by mass or more of silica and 10 parts by mass or more of carbon black per 100 parts by mass of the rubber component.

This configuration is capable of achieving both the wear resistance and the low loss property when used in a tire or other rubber products.

The tire of this disclosure uses the aforementioned rubber composition.

This configuration is capable of achieving both the wear resistance and the low loss property.

(Advantageous Effect)

According to this disclosure, it is possible to provide an emulsion polymerized styrene-butadiene rubber capable of achieving both the wear resistance and the low loss property when used to a tire or other rubber products. Moreover, according to this disclosure, it is possible to provide a rubber composition capable of achieving both the wear resistance and the low loss property when used to a tire or other rubber products, and to provide a tire capable of achieving both the wear resistance and the low loss property.

DETAILED DESCRIPTION

(Emulsion polymerized styrene-butadiene rubber)

An embodiment of the emulsion polymerized styrene-butadiene rubber of this disclosure will be described below in detail.

The emulsion polymerized styrene-butadiene rubber of this disclosure (hereinafter referred to as "the emulsion polymerization SBR" as necessary) is a styrene-butadiene rubber synthesized via emulsion polymerization, the styrene-butadiene rubber containing at a terminal: a modified functional group containing a nitrogen atom and having a solubility parameter (SP value) obtained with Fedors method of 9.55 or less; or a modified functional group containing a hydroxyl group and having the SP value of less than 15.00.

An emulsion polymerized styrene-butadiene rubber with high wear resistance, when provided at a terminal with a modified functional group containing a nitrogen atom and having a solubility parameter (SP value) obtained with Fedors method of 9.55 or less (preferably a modified functional group containing a silicon atom and a nitrogen atom), or a modified functional group containing a hydroxyl group and having the SP value of less than 15.00, is capable of enhancing the affinity with a filler and greatly improving the low loss property when used to a tire or other rubber products.

Note that the affinity with a filler refers to a property of generating covalent bonds or an intermolecular force weaker than covalent bonds (electromagnetism forces functioning between molecules such as ion-dipole interaction, dipole-dipole interaction, hydrogen bond, Van der Waals force and ionic bonding) between a modified functional group and a surface of silica, etc. as the filler. An interaction between covalent bonds and non-covalent-bond intermolecular forces is obtained, leading to an effect of a higher binding rate or a larger interaction during compounding.

Here, the styrene-butadiene rubber constituting the emulsion polymerization SBR of this disclosure is a copolymer of butadiene and styrene.

A content of butadiene in the emulsion polymerization SBR is not specifically limited and may be appropriately adjusted, but from the viewpoint of ensuring excellent wear resistance, 50 mass% or more is preferable, and 60 mass% or more is more preferable.

Moreover, a content of styrene in the emulsion polymerization SBR is not specifically limited and may be appropriately adjusted as well, but from the viewpoint of ensuring excellent wear resistance, 10 mass% or more is preferable, and 20 mass% or more is more preferable.

As mentioned above, a terminal of the emulsion polymerized styrene-butadiene rubber of this disclosure is provided with: a modified functional group containing a nitrogen atom and having an SP value of 9.55 or less; or a modified functional group containing a hydroxyl group and having an SP value of less than 15.00.

Here, the SP value refers to a solubility parameter obtained with Fedors method, and by respectively setting the SP values of the modified functional groups to 9.55 or less and less than 15.00, as mentioned above, it is possible to improve the affinity with a filler and to greatly improve the low loss property.

Note that the SP value in this disclosure is obtained with Fedors method (specifically, see R.F, Fedors: Polym. Eng. Sci. 14[2], P147-154, 1974), and can be specifically calculated from the following formula.

$$\delta i=[\ Ev/V\ ]^{\wedge}(1/2)=[\ \delta ei/\delta vi\ ]^{\wedge}(1/2)$$

Ev: evaporation energy
V: molar volume
δei: evaporation energy of atom or atomic group of component i
δvi: molar volume of atom or atomic group of component i

It is preferable that among the modified functional groups, the modified functional group containing a nitrogen atom further contains a silicon atom, i.e., contains a silicon atom and a nitrogen atom. This is because that it is possible to improve the aforementioned affinity with a filler, and to improve the low loss property more effectively.

The aforementioned modified functional group is not specifically limited and may be various modified functional groups, as long as it is located at a terminal of the emulsion polymerized styrene-butadiene rubber, and satisfies specific requirements (containing a nitrogen atom and having an SP value of 9.55 or less, or containing a hydroxyl group and having an SP value of less than 15.00).

Among these, it is preferable that the modified functional group containing a nitrogen atom contains an alkoxy silyl group and an amino group (any one of primary, secondary and tertiary), the silicon atom being derived from the alkoxy silyl group, and the nitrogen atom being derived from the amino group. By containing both an alkoxy silyl group and an amino group in the modified functional group, the affinity with a filler is further improved, and thus it is possible to obtain a more excellent improvement effect of the wear resistance and the low loss property when used as a rubber composition.

It is preferable that the modified functional group containing a nitrogen atom further contains a sulfur atom. This is because that although it is ordinarily difficult to provide a modified functional group to a terminal of an emulsion polymerization SBR, by using a compound containing a sulfur atom, it is possible to easily and securely provide the modified functional group. Here, it is preferable that a modifier used when introducing the modified functional group is a modifier containing a thiol, and it is more preferable that the sulfur atom is derived from a thiol.

From the viewpoint of achieving both the wear resistance and the low loss property at a higher degree, it is preferable that the modified functional group is represented by any one of the following formulae (1) to (3):

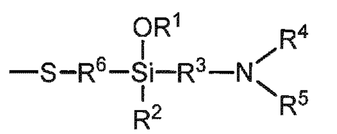

・・・(1)

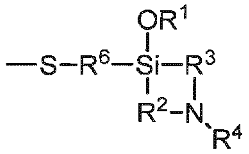

・・・(2)

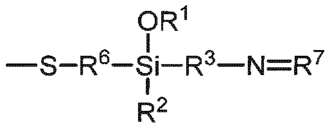

・・・(3)

(where each of $R^1$ and $R^6$ is a $C_1$ to $C_{12}$ alkyl group; $R^2$ is a $C_1$ to $C_{12}$ alkyl group or a $C_1$ to $C_{12}$ alkoxy group; $R^3$ is a $C_1$ to $C_{12}$ alkoxy group; each of $R^4$ and $R^5$ is a hydrogen atom, a hydrolyzable group, or a group containing an alkylsilane with an alkyl group or an aryl group; and $R^7$ is an alkyl group or a hydrolyzable group.)

Note that it is more preferable that the hydrolyzable groups in the formulae (1) to (3) are trimethylsilyl groups.

A number-average molecular weight (Mn) of the emulsion polymerization SBR of this disclosure is not specifically limited, but is preferably 50,000 or more. This is for the purpose of obtaining excellent processability, while achieving both the wear resistance and the low loss property. Moreover, from the same viewpoint, the number-average molecular weight (Mn) is more preferably within a range of 50,000 to 500,000, particularly preferably within a range of 100,000 to 400,000.

A molecular weight distribution (Mw: weight-average molecular weight / Mn: number-average molecular weight) of the emulsion polymerization SBR of this disclosure is preferably more than 2.5, particularly preferably 3 or more. This is because that by setting the molecular weight distribution to more than 3, it is possible to achieve more excellent wear resistance.

Next, an example of the conditions for producing the emulsion polymerization SBR of this disclosure is described.

The emulsion polymerization SBR of this disclosure can be obtained by synthesizing via emulsion polymerization, for example, by emulsifying a radical polymerizable monomer in water by using an emulsifier in the presence of a modifier, and adding a radical initiator to an obtained emulsion so as to perform radical polymerization.

Note that the emulsion may be prepared with a well-known method by using an emulsifier. The emulsifier is not specifically limited and may be a well-known material. Examples include fatty acid salts, rosin acid salts, etc. Examples of the fatty acid salts and the rosin acids salts include potassium salts and sodium salts of capric acid, lauric acid, myristic acid, etc.

The emulsion polymerization may be performed with a well-known method by using a radical polymerization initiator. The radical polymerization initiator is not specifically limited and may be a well-known material. Examples include redox initiators such as paramenthane hydroperoxide, and persulfates such as ammonium persulfate.

Furthermore, a temperature of emulsion polymerization may be appropriated changed depending on the type of the used radical initiator, but is preferably 0°C to 50°C, more preferably 0°C to 20°C.

Note that the emulsion polymerization may be terminated by adding a terminator to the polymerization system. The terminator is not specifically limited and may be a well-known material. Examples include N,N'-dimethyl dithiocarbamate, diethylhydroxylamine, hydroquinone, etc.

Note that the modifier for providing the modified functional group containing a silicon atom and a nitrogen atom to the emulsion polymerization SBR may be a modifier having a silicon atom and a nitrogen atom.

From the viewpoint of having a high affinity with the filler such as silica, the modifier is preferably an aminoalkoxy silane compound.

The alkoxysilane compound is not specifically limited as long as it contains a nitrogen atom, but is preferably a hydrocarbyloxy silane compound represented by the following general formula (I).

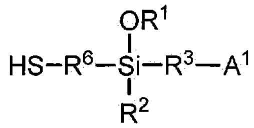 ・・・(I)

In the general formula (I), $A^1$ is at least one functional group selected from: a saturated cyclic tertiary amine compound residual group, an unsaturated cyclic tertiary amine compound residual group, a ketimine residual group, a nitrile group, a (thio)isocyanate group (an isocyanate group or a thioisocyanate group; the same hereinafter), a (thio)epoxy group, an isocyanuric acid trihydrocarbyl ester group, a carbonic acid dihydrocarbyl ester group, a nitrile group, a pyridine group, a (thio)ketone group, a (thio)aldehyde group, an amide group, a (thio)carboxylic acid ester group, a metallic salt of a (thio)carboxylic acid ester, a carboxylic acid anhydride residual group, a carboxylic halide residual group, or a primary or secondary amino group or mercapto group having a hydrolyzable group, and may be a divalent group forming a cyclic structure by binding with Si. $R^1$ is a $C_1$ to $C_{20}$ monovalent aliphatic or alicyclic hydrocarbon group, or a $C_6$ to $C_{18}$ monovalent aromatic hydrocarbon group. $R^2$ is a $C_1$ to $C_{20}$ monovalent aliphatic or alicyclic hydrocarbon group, a $C_6$ to $C_{18}$ monovalent aromatic hydrocarbon group, a halogen atom (fluorine, chlorine, bromine or iodine), or an alkoxy group composed of a $C_1$ to $C_{20}$ monovalent aliphatic, which may be either identical to or different from $OR^1$. $R^3$ is a $C_1$ to $C_{20}$ divalent aliphatic or alicyclic hydrocarbon group, or a $C_6$ to $C_{18}$ divalent aromatic hydrocarbon group. $R^6$ is a $C_1$ to $C_{20}$ monovalent aliphatic or alicyclic hydrocarbon group, or a $C_6$ to $C_{18}$ monovalent aromatic hydrocarbon group, either of which may contain a nitrogen atom and/or a silicon atom.

The hydrolyzable group in the primary or secondary amino group having a hydrolyzable group or the mercapto group having a hydrolyzable group is preferably trimethylsilyl group, tert-butyl dimethylsilyl group or a silyl group containing a phenyl group, more preferably trimethylsilyl group.

Note that in this disclosure, the "$C_1$ to $C_{20}$ monovalent aliphatic or alicyclic hydrocarbon group" refers to "$C_1$ to $C_{20}$ monovalent aliphatic hydrocarbon group or $C_3$ to $C_{20}$ monovalent alicyclic hydrocarbon group". The same goes with the case of divalent hydrocarbon group.

The hydrocarbyl oxysilane compound represented by the general formula (I) is preferably a hydrocarbyl oxysilane compound represented by the following general formulae (II) to (IV).

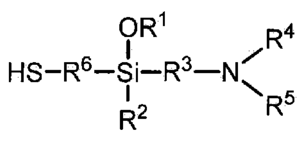 ・・・(II)

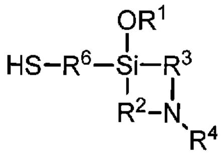

・・・(III)

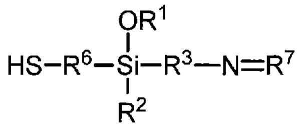

・・・(IV)

In the general formulae (II) to (IV), $R^1$, $R^3$ and $R^6$ are each, independently of one another, a $C_1$ to $C_{20}$ monovalent aliphatic or alicyclic hydrocarbon group, or a $C_6$ to $C_{18}$ monovalent aromatic hydrocarbon group. $R^2$ is a $C_1$ to $C_{20}$ monovalent aliphatic or alicyclic hydrocarbon group, a $C_6$ to $C_{18}$ monovalent aromatic hydrocarbon group, or an alkoxy group composed of a $C_1$ to $C_{20}$ monovalent aliphatic or alicyclic hydrocarbon group or a $C_6$ to $C_{18}$ monovalent aromatic hydrocarbon group, which may be either identical to or different from $OR^1$. $R^4$ and $R^5$ are each, independently of one another, a monovalent hydrocarbon group, a hydrolyzable group, a nitrogen-containing organic group, or a hydrogen atom. The hydrolyzable group is preferably trimethylsilyl group or tert-butyl dimethylsilyl group, particularly preferably a trimethylsilyl group. Note that in the case where $R^4$ and $R^5$ are hydrogen atoms, $NR^4R^5$ is a primary amino group. $R^7$ is a $C_1$ to $C_{20}$ monovalent aliphatic or alicyclic hydrocarbon group, a $C_6$ to $C_{18}$ monovalent aromatic hydrocarbon group, a $C_1$ to $C_{20}$ monovalent aliphatic or alicyclic hydrocarbon group, or $C_1$ to $C_{20}$ monovalent aliphatic or alicyclic hydrocarbon group, where $N{=}R^7$ is an imino group.

(Rubber composition)

The rubber composition of this disclosure comprises: a rubber component containing the emulsion polymerized styrene-butadiene rubber of this disclosure; and 10 parts by mass or more of silica and 10 parts by mass or more of carbon black per 100 parts by mass of the rubber component.

By using the aforementioned emulsion polymerization SBR as a rubber component, it is possible to improve the wear resistance when used in a rubber product such as tire, and due to the modified functional group containing a silicon atom and a nitrogen atom, the affinity of the rubber component with a filler such as silica is enhanced, which greatly improves the low loss property.

In the rubber composition of this disclosure, other than the aforementioned emulsion polymerization SBR, the rubber component may further contain a natural rubber (NR), a polybutadiene rubber (BR), a polyisoprene rubber (IR), a butyl rubber (IIR), an ethylene-propylene copolymer, etc., and among these, it is preferable that at least one selected from a natural rubber, a polyisoprene rubber or a polybutadiene rubber is contained. These rubber components may be used singly or as a blend of two or more.

The content of the emulsion polymerization SBR in the rubber component is preferably 50 mass% or more. This is because that if the content of the emulsion polymerization SBR in the rubber component is less than 50 mass%, the improvement effect of the wear resistance and the low loss property of the rubber composition is slight.

A content of the silica is set to 10 parts by mass or more per 100 parts by mass of the rubber component, because that if the content is less than 10 parts by mass, since the amount of the silica is small, there is a risk that the improvement effect of the sufficient low loss property cannot be obtained. From the viewpoint of maintaining the wear resistance at a high degree while improving sufficient low loss property, the content of the silica is preferably 10 to 100 parts by mass, more preferably 30 to 90 parts by mass per 100 parts by mass of the rubber component.

Note that the type of the silica is not specifically limited, and may be either a silica of an ordinary grade or a special silica subjected to surface treatment according to its usage. For example, from the viewpoint of improving the processability, the mechanical strength and the wear resistance, wet silica is preferably used.

A content of the carbon black is set to 10 parts by mass or more per 100 parts by mass of the rubber component, because that if the content is less than 10 parts by mass, since the amount of carbon black is small, there is a risk that sufficient improvement effect of wear resistance cannot be obtained. This is also for the purpose of suppressing degradation of the rubber due to UV ray. From the viewpoint of suppressing degradation of the rubber while obtaining sufficient improvement effect of wear resistance, the content of the carbon black is preferably 10 to 60 parts by mass, more preferably 10 to 50 parts by mass per 100 parts by mass of the rubber component.

Here, the type of the carbon black is not specifically limited. Examples include those of FEF, SRF, HAF, ISAF, SAF grades, among which HAF, ISAF, SAF grades are preferable.

Other than the aforementioned rubber component, silica and carbon black, compounding ingredients ordinarily

used in the rubber industry, for example, an age resistor, a silane coupling agent, a vulcanization accelerator, a vulcanization accelerator aid, a vulcanizing agent and a softener, may be appropriately selected and compounded to the rubber composition of this disclosure as long as not inhabiting the purpose of this disclosure. These compounding agents are preferably commercially available ones. The rubber composition of this disclosure may be produced by compounding to the rubber component silica, carbon black, and appropriately selected various compounding agents if necessary, via kneading, warming, extrusion, etc.

(Rubber product)

The rubber product of this disclosure uses the rubber composition of this disclosure. The type of the rubber product is not specifically limited. Examples include rubber products such as a tire, an anti-vibration rubber, a rubber crawler, a conveyor belt, a seismic isolation rubber, and various elastomers.

Among these rubber products, from the viewpoint of an advantage of this disclosure due to its effect of achieving both the wear resistance and the low loss property, a tire is preferable.

The tire of this disclosure uses the rubber composition of this disclosure. A tire in which the rubber composition of this disclosure is used to a tread member such as tread rubber or other members has improved wear resistance and improved low loss property.

Note that the tire of this disclosure is not specifically limited as long as using the aforementioned rubber composition on any tire member, and may be produced with an ordinary method. Moreover, the gas filled in the tire may be ordinary air, air with adjusted oxygen partial pressure, or inactive gases such as nitrogen, argon, helium and the like.

EXAMPLES

This disclosure will be explained in further details in the following according to examples, while this disclosure is not limited to the following examples.

Polymers A to G were produced according to the following process. Note that the types of the used modifier, the number-average molecular weight and the molecular weight distribution of each polymer are as indicated in Table 1. Note that the number-average molecular weights and the molecular weight distributions of the polymers in Table 1 were measured by using a gel permeation chromatography (GPC) (HLC-8120GPC, manufactured by Tosoh Corporation). The molecular weights are calculated via a calibration curve manufactured by using a standard polystyrene, and indicate values of weight-average molecular weights Mw.

(Production of polymer A)

First, an electrolyte and a reductant as indicated in Table 1 were adjusted with degassed water. Next, water, the electrolyte, soap, the reductant and styrene were conducted into a reactor and were well degassed, and then, butadiene is conducted, to thereby convert the system into an emulsion. Afterward, a deoxidant and a styrene solution of peroxide were added, so as to perform polymerization at 7°C.

During the process, a polymerization conversion ratio was measured, and at the time point when it became around 65%, a diethylhydroxyamine water solution was added to terminate the polymerization. By blowing steam vapor into the obtained emulsion, the residual monomer was distilled, and then, by adding a saturated sodium chloride water solution, the polymer was separated from the water solution. By washing with water and drying the obtained polymer, it was possible to obtain the polymer A as a target at a yield of 68%.

(Production of polymers B to K)

The polymers B to K were produced with the same method as the method for producing the polymer A, except that the modifiers of the types as indicated in Table 2 were added as the styrene solution. The yield of each polymer was calculated via the same operations as the polymer A. The weight-average molecular weight, the molecular weight distribution and the yield of the obtained polymers are as indicated in Table 2.

Table 1

| | | |
|---|---|---|
| Electrolyte | Sodium chloride | 320mg |
| | Sodium hydroxide | 10mg |
| | NAS | 206mg |
| Soap | Sodium rosinate | 4g |

(continued)

| | | |
|---|---|---|
| Reductant | Iron sulfate heptahydrate | 50mg |
| | EDTA | 70mg |
| | SFS | 400mg |
| Modifier | Various* | 180mg |
| Peroxide | Paramenthane hydroperoxide | 150mg |
| Deoxidant | Sodium hydrogen sulfite | 55mg |
| Water | | 200g |
| Styrene | | 25g |
| Butadiene | | 75g |
| *The types of the used modifiers are as indicated in Table 2. | | |

Table 2

| Type of polymer | A | B | C | D | E | F | G | H | I | J | K |
|---|---|---|---|---|---|---|---|---|---|---|---|
| Type of modifier | -- | Modifier B | Modifier C | Modifier D | Modifier E | Modifier F | Modifier G | Modifier H | Modifier I | Modifier J | Modifier K (with the $NH_2$ in Modifier H changed to OH) |
| SP value of modified functional group | | 8.73 | 15.4 | 9.57 | 8.86 | 8.83 | 9.51 | 9.47 | 8.17 | 8.66 | 10.73 |
| Weight-average molecular weight Mw [kDa] | 1477 | 564 | 1502 | 573 | 582 | 512 | 522 | 577 | 565 | 558 | 543 |
| Number-average molecular weight Mw/Mn | 5.4 | 3.6 | 5.6 | 3.7 | 4.1 | 4.5 | 5.0 | 5.2 | 4.8 | 4.7 | 4.2 |
| Yield [%] | 68 | 64 | 65 | 66 | 66 | 65 | 65 | 65 | 61 | 60 | 60 |

Note that the structures of the modifiers B to J used in modification of each polymer are as illustrated in the following.

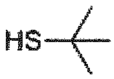

Modifier B

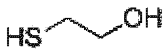

Modifier C

$HS-C_{12}H_{24}-NH_2$

Modifier D

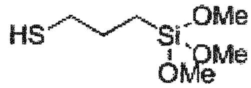

Modifier E

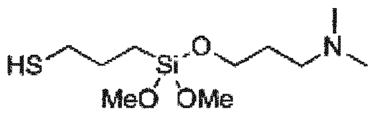

Modifier F

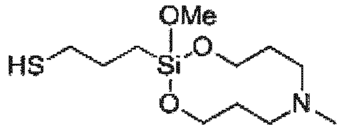

Modifier G

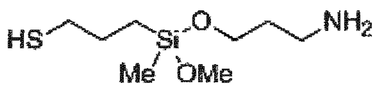

Modifier H

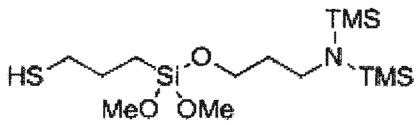

Modifier I

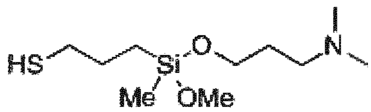

Modifier J

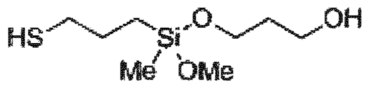

Modifier K

Note that according to the results in Table 2, the polymer C using the modifier C had a molecular weight of the same degree as the polymer A, which had no modifier added thereto. The reason is considered as that since the modifier C had a high SP value, the modifier was incorporated into the polymer.

<Examples 1 to 6 and Comparative Examples 1 to 5>

By using the aforementioned modified polymers A to K and adjusting the rubber composition according to the formulation as indicated in Table 3, each sample of the examples and the comparative examples was obtained.

Each sample of the examples and the comparative examples was subjected to evaluation of: (1) the processability, (2) the wear resistance, and (3) the low loss property (tan$\delta$).

(1) Processability

With respect to each sample, according to JIS-K6300-1:2001, the Mooney viscosity [ML1+4(130°C)] of unvulcanized rubber composition was measured with a Mooney viscosity meter (RPA, manufactured by Monsanto), by using an L-type rotor at 130°C.

The obtained Mooney viscosity of the unvulcanized rubber compositions was indexed, with the value of Comparative Example 2 as 100. The result was as indicated in Table 2. Here, a smaller index value of Mooney viscosity indicates better flowability of the rubber composition and more excellent processability.

(2) Wear resistance

With respect to each sample, by using Lambourn abrasion test, the abrasion amount at a slip rate of 60% at room temperature was measured.

The obtained value of abrasion amount was indexed, with the value of Comparative Example 2 as 100. The result was as indicated in Table 2. A smaller index value indicates smaller abrasion amount and more excellent wear resistance.

(3) Low loss property (tan$\delta$)

With respect to each sample, the loss tangent (tan$\delta$) was measured by using a viscoelasticity measurement

apparatus (manufactured by Rheometrics Inc.) at a temperature of 50°C, a strain of 5% and a frequency of 15 Hz.

The obtained value of tan$\delta$ was indexed, with the value of Comparative Example 2 as 100. The result was as indicated in Table 2. Here, a smaller index value of the low loss property indicates more excellent low loss property.

Table 3

| | Comparative Example | | | | | Example | | | | | |
|---|---|---|---|---|---|---|---|---|---|---|---|
| | 1 | 2 | 3 | 4 | 5 | 1 | 2 | 3 | 4 | 5 | 6 |
| Polymer A | 100 | - | - | - | - | - | - | - | - | - | - |
| P olymer B | - | 100 | - | - | - | - | - | - | - | - | - |
| Polymer C | - | - | 100 | - | - | - | - | - | - | - | - |
| Polymer D | - | - | - | 100 | - | - | - | - | - | - | - |
| Polymer E | - | - | - | - | 100 | - | - | - | - | - | - |
| Polymer F | - | - | - | - | - | 100 | - | - | - | - | - |
| Polymer G | - | - | - | - | - | - | 100 | - | - | - | - |
| Polymer H | - | - | - | - | - | - | - | 100 | - | - | - |
| Polymer I | - | - | - | - | - | - | - | - | 100 | - | - |
| Polymer J | - | - | - | - | - | - | - | - | - | 100 | - |
| Polymer K | - | - | - | - | - | - | - | - | - | - | 100 |
| Silica*1 | 50 | 50 | 50 | 50 | 50 | 50 | 50 | 50 | 50 | 50 | 50 |
| Carbon black*2 | 10 | 10 | 10 | 10 | 10 | 10 | 10 | 10 | 10 | 10 | 10 |
| Process oil*3 | 20 | 20 | 20 | 20 | 20 | 20 | 20 | 20 | 20 | 20 | 20 |
| Stearic acid | 2 | 2 | 2 | 2 | 2 | 2 | 2 | 2 | 2 | 2 | 2 |
| Age resistor*4 | 2 | 2 | 2 | 2 | 2 | 2 | 2 | 2 | 2 | 2 | 2 |
| Zinc oxide | 4 | 4 | 4 | 4 | 4 | 4 | 4 | 4 | 4 | 4 | 4 |
| Silane coupling agent*5 | 5 | 5 | 5 | 5 | 5 | 5 | 5 | 5 | 5 | 5 | 5 |
| Vulcanization accelerator A*6 | 1 | 1 | 1 | 1 | 1 | 1 | 1 | 1 | 1 | 1 | 1 |
| Vulcanization accelerator B*7 | 1 | 1 | 1 | 1 | 1 | 1 | 1 | 1 | 1 | 1 | 1 |
| Vulcanization accelerator C*8 | 1 | 1 | 1 | 1 | 1 | 1 | 1 | 1 | 1 | 1 | 1 |
| Sulfur | 1.5 | 1.5 | 1.5 | 1.5 | 1.5 | 1.5 | 1.5 | 1.5 | 1.5 | 1.5 | 1.5 |
| Processability (the smaller, the better) | 210 | 100 | 211 | 101 | 105 | 100 | 105 | 99 | 102 | 102 | 101 |
| Wear resistance (the smaller, the better) | 167 | 100 | 171 | 95 | 90 | 79 | 76 | 70 | 72 | 72 | 85 |
| Low loss property (the smaller, the better) | 55 | 100 | 54 | 90 | 90 | 75 | 79 | 69 | 69 | 69 | 85 |

*1: AQ, NIPSIL AQ, manufactured by Tosoh Silica Corporation
*2: DIABLACK N234 (manufactured by Mitsubishi Chemical)
*3: PROCESS OIL, A/O MIX, manufactured by Sankyo Yuka Kogyo K.K.
*4: NOCRAC 6C (manufactured by Ouchi Shinko Chemical Industrial Co.,Ltd.)
*5: Bis-[y-(triethoxysilyl)-propyl]-tetrasulfide, Si69, manufactured by Evonik Degussa
*6: Diphenyl guanidine, NOCCELER D, manufactured by Ouchi Shinko Chemical Industrial Co., Ltd.
*7: Benzothiazyl disulfide, NOCCELER DM-P, manufactured by Ouchi Shinko Chemical Industrial Co., Ltd.
*8: N-t-butyl-2-benzothiazylsulfenamide, NOCCELER NS-P, manufactured by Ouchi Shinko Chemical Industrial Co., Ltd.

From the results in Table 3, it is understood that the samples of Comparative Example 1, which used the polymer A without a modifier added thereto, and Comparative Example 3, which used a polymer C without the effect of

modifier, had worse wear resistance and lower loss as compared to the sample of Comparative Example 2, which uses the modified polymer B. The reason is considered as that the filler did not disperse due to an excessively high molecular weight, and thus the high wear resistance and the low loss property as the target cannot be both achieved.

Moreover, it is understood that the samples of Comparative Example 4, which used the polymer D introduced with an amino group, and Comparative Example 5, which used the polymer E introduced with an alkoxy silyl group, obtained an effect to the wear resistance and the low loss property at some degree.

Furthermore, it is understood that each of the samples of Examples 1 to 6, which used modifiers containing specific modified functional groups within the range of this disclosure had a wear resistance and a low loss property (tan$\delta$) greatly more excellent as compared to any one of Comparative Example 2 and Comparative Examples 4, 5.

<Examples 7 to 8 and Comparative Examples 6 to 7>

By using the aforementioned modified polymers B, F, and adjusting the rubber composition according to the formulation as indicated in Table 4, each sample of the examples and the comparative examples was obtained.

Each sample of Examples 7, 8 and Comparative Examples 6, 7 was subjected to evaluation of: (1) the processability, (2) the wear resistance, and (3) the low loss property (tan$\delta$) under the same conditions as the aforementioned Examples 1 to 6 and Comparative Examples 1 to 5. The evaluation results were as indicated in Table 4.

Table 4

| | Comparative Example 6 | Example 7 | Comparative Example 7 | Example 8 |
|---|---|---|---|---|
| Polymer B | 80 | - | 80 | - |
| Polymer F | - | 80 | - | 80 |
| Natural rubber | 20 | 20 | - | - |
| Polybutadiene | - | - | 20 | 20 |
| Silica | 50 | 50 | 50 | 50 |
| Carbon black | 10 | 10 | 10 | 10 |
| Process oil | 20 | 20 | 20 | 20 |
| Stearic acid | 2 | 2 | 2 | 2 |
| Age resistor | 2 | 2 | 2 | 2 |
| Zinc oxide | 4 | 4 | 4 | 4 |
| Silane coupling agent | 5 | 5 | 5 | 5 |
| Vulcanization accelerator A | 1 | 1 | 1 | 1 |
| Vulcanization accelerator B | 1 | 1 | 1 | 1 |
| Vulcanization accelerator C | 1 | 1 | 1 | 1 |
| Sulfur | 1.5 | 1.5 | 1.5 | 1.5 |
| Processability (the smaller, the better) | 100 | 100 | 100 | 101 |
| Wear resistance (the smaller, the better) | 100 | 84 | 100 | 81 |
| Low loss property (the smaller, the better) | 100 | 81 | 100 | 79 |

From the results in Table 4, it is understood that the sample of Example 7, which also used the emulsion polymerization SBR obtained in this disclosure to a system in which 20 parts by mass of a natural rubber was blended in a rubber component, achieved both the wear resistance and the low loss property.

Moreover, it is understood that the sample of Example 8, which similarly uses the emulsion polymerization SBR obtained in this disclosure to a system in which polybutadiene is blended, achieved both the wear resistance and the low loss property.

INDUSTRIAL APPLICABILITY

According to this disclosure, it is possible to provide an emulsion polymerized styrene-butadiene rubber capable of achieving both the wear resistance and the low loss property when used to a tire or other rubber products. Moreover, according to this disclosure, it is possible to provide a rubber composition capable of achieving both the wear resistance and the low loss property when used to a tire or other rubber products, and to provide a tire capable of achieving both the wear resistance and the low loss property.

## Claims

1. An emulsion-polymerized styrene-butadiene rubber synthesizable via emulsion polymerization, comprising at a terminal:

   a modified functional group containing a nitrogen atom and having an SP value of 9.55 or less; or
   a modified functional group containing a hydroxyl group and having an SP value of less than 15.00,
   where the SP values are solubility parameters obtained with a Fedors method.

2. The emulsion-polymerized styrene-butadiene rubber according to claim 1, wherein:
   the modified functional group containing a nitrogen atom further contains a silicon atom.

3. The emulsion-polymerized styrene-butadiene rubber according to claim 2, wherein:

   the modified functional group containing a nitrogen atom contains an alkoxy silyl group and an amino group,
   the silicon atom is derived from the alkoxy silyl group, and
   the nitrogen atom is derived from the amino group.

4. The emulsion-polymerized styrene-butadiene rubber according to any one of claims 1 to 3, wherein:
   the modified functional group containing a nitrogen atom further contains a sulfur atom.

5. The emulsion-polymerized styrene-butadiene rubber according to claim 4, wherein:
   the modified functional group containing a nitrogen atom is represented by any one of the following formulae (1) to (3):

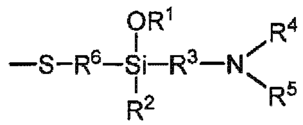

· · · (1)

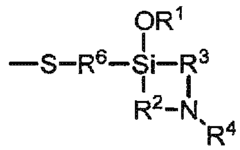

· · · (2)

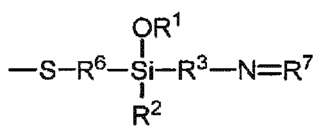

· · · (3)

   where each of $R^1$ and $R^6$ is a $C_1$ to $C_{12}$ alkyl group; $R^2$ is a $C_1$ to $C_{12}$ alkyl group or a $C_1$ to $C_{12}$ alkoxy group; $R^3$ is a $C_1$ to $C_{12}$ alkyl group; each of $R^4$ and $R^5$ is a hydrogen atom, a hydrolyzable group, or a group containing an alkylsilane with an alkyl group or an aryl group; and $R^7$ is an alkyl group or a hydrolyzable group.

6. The emulsion-polymerized styrene-butadiene rubber according to claim 5, wherein:
   in the modified functional group containing a nitrogen atom, the hydrolyzable groups in the formulae (1) to (3) are trimethylsilyl groups.

7. The emulsion-polymerized styrene-butadiene rubber according to any one of claims 4 to 6, wherein:

a modifier used to introduce the modified functional group containing a nitrogen atom contains a thiol, and the sulfur atom of the modified functional group is derived from a thiol.

**8.** The emulsion-polymerized styrene-butadiene rubber according to any one of claims 1 to 7, having a number-average molecular weight of 50,000 or more.

**9.** The emulsion-polymerized styrene-butadiene rubber according to any one of claims 1 to 8, having a molecular weight distribution of more than 2.5.

**10.** A rubber composition comprising:

a rubber component containing the emulsion-polymerized styrene-butadiene rubber according to any one of claims 1 to 9; and
10 parts by mass or more of silica and 10 parts by mass or more of carbon black per 100 parts by mass of the rubber component.

**11.** A tire using the rubber composition of claim 10.

**Patentansprüche**

**1.** Emulsionspolymerisierter Styrol-Butadien-Kautschuk, der durch Emulsionspolymerisation synthetisierbar ist, umfassend an einem Ende:

eine modifizierte funktionelle Gruppe, die ein Stickstoffatom enthält und einen SP-Wert von 9,55 oder weniger aufweist; oder
eine modifizierte funktionelle Gruppe, die eine Hydroxylgruppe enthält und einen SP-Wert von weniger als 15,00 aufweist,
wobei die SP-Werte Löslichkeitsparameter sind, die anhand einer Fedors-Methode ermittelt werden.

**2.** Emulsionspolymerisierter Styrol-Butadien-Kautschuk nach Anspruch 1, wobei:
die modifizierte funktionelle Gruppe, die ein Stickstoffatom enthält, ferner ein Siliciumatom enthält.

**3.** Emulsionspolymerisierter Styrol-Butadien-Kautschuk nach Anspruch 2, wobei:

die modifizierte funktionelle Gruppe, die ein Stickstoffatom enthält, eine Alkoxysilylgruppe und eine Aminogruppe enthält,
das Siliciumatom von der Alkoxysilylgruppe abgeleitet ist, und
das Stickstoffatom von der Aminogruppe abgeleitet ist.

**4.** Emulsionspolymerisierter Styrol-Butadien-Kautschuk nach einem der Ansprüche 1 bis 3, wobei:
die modifizierte funktionelle Gruppe, die ein Stickstoffatom enthält, ferner ein Schwefelatom enthält.

**5.** Emulsionspolymerisierter Styrol-Butadien-Kautschuk nach Anspruch 4, wobei:
die modifizierte funktionelle Gruppe, die ein Stickstoffatom enthält, durch eine der folgenden Formeln (1) bis (3) dargestellt ist;

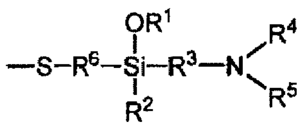 ・・・(1)

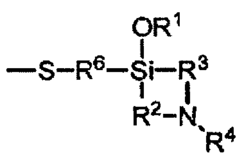 ・・・(2)

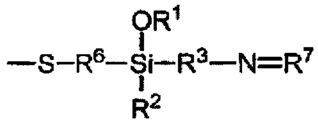

・・・(3)

wobei jedes von $R^1$ und $R^6$ eine $C_1$- bis $C_{12}$-Alkylgruppe ist; $R^2$ eine $C_1$- bis $C_{12}$-Alkylgruppe oder eine $C_1$- bis $C_{12}$-Alkoxygruppe ist; $R^3$ eine $C_1$- bis $C_{12}$-Alkylgruppe ist; jedes von $R^4$ und $R^5$ ein Wasserstoffatom, eine hydrolysierbare Gruppe oder eine Gruppe ist, die ein Alkylsilan mit einer Alkylgruppe oder einer Arylgruppe enthält; und $R^7$ eine Alkylgruppe oder eine hydrolysierbare Gruppe ist.

**6.** Emulsionspolymerisierter Styrol-Butadien-Kautschuk nach Anspruch 5, wobei:
in der modifizierten funktionellen Gruppe, die ein Stickstoffatom enthält, die hydrolysierbaren Gruppen in den Formeln (1) bis (3) Trimethylsilylgruppen sind.

**7.** Emulsionspolymerisierter Styrol-Butadien-Kautschuk nach einem der Ansprüche 4 bis 6, wobei:

ein Modifikator, welcher verwendet wird, um die modifizierte funktionelle Gruppe, die ein Stickstoffatom enthält, einzuführen, ein Thiol enthält, und
das Schwefelatom der modifizierten funktionellen Gruppe von einem Thiol abgeleitet ist.

**8.** Emulsionspolymerisierter Styrol-Butadien-Kautschuk nach einem der Ansprüche 1 bis 7, der ein Zahlenmittel des Molekulargewichts von 50.000 oder mehr hat.

**9.** Emulsionspolymerisierter Styrol-Butadien-Kautschuk nach einem der Ansprüche 1 bis 8, der eine Molekulargewichtsverteilung von mehr als 2,5 hat.

**10.** Kautschukzusammensetzung, umfassend:

eine Kautschukkomponente, die den emulsionspolymerisierten Styrol-Butadien-Kautschuk nach einem der Ansprüche 1 bis 9 enthält; und
10 Massenteile Siliciumdioxid oder mehr und 10 Massenteile Ruß oder mehr pro 100 Massenteile der Kautschukkomponente.

**11.** Reifen, der die Kautschukzusammensetzung nach Anspruch 10 verwendet.

## Revendications

**1.** Caoutchouc styrène-butadiène polymérisé en émulsion synthétisable par l'intermédiaire d'une polymérisation en émulsion, comprenant à une terminaison :

un groupe fonctionnel modifié contenant un atome d'azote et ayant une valeur SP de 9,55 ou moins ; ou
un groupe fonctionnel modifié contenant un groupe hydroxyle et ayant une valeur SP inférieure à 15,00,
où les valeurs SP sont des paramètres de solubilité obtenus avec un procédé de Fedors.

**2.** Caoutchouc styrène-butadiène polymérisé en émulsion selon la revendication 1, dans lequel :
le groupe fonctionnel modifié contenant un atome d'azote contient en outre un atome de silicium.

**3.** Caoutchouc styrène-butadiène polymérisé en émulsion selon la revendication 2, dans lequel :

le groupe fonctionnel modifié contenant un atome d'azote contient un groupe alcoxy-silyle et un groupe amino,
l'atome de silicium est dérivé du groupe alcoxy-silyle et
l'atome d'azote est dérivé du groupe amino.

**4.** Caoutchouc styrène-butadiène polymérisé en émulsion selon l'une quelconque des revendications 1 à 3, dans lequel :
le groupe fonctionnel modifié contenant un atome d'azote contient en outre un atome de soufre.

**5.** Caoutchouc styrène-butadiène polymérisé en émulsion selon la revendication 4, dans lequel : le groupe fonctionnel modifié contenant un atome d'azote est représenté par l'une quelconque des formules (1) à (3) suivantes ;

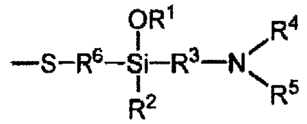
· · · (1)

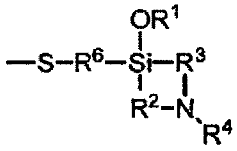
· · · (2)

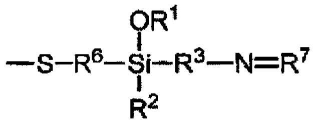
· · · (3)

où chacun de $R^1$ et $R^6$ est un groupe alkyle en $C_1$ à $C_{12}$ ; $R^2$ est un groupe alkyle en $C_1$ à $C_{12}$ ou un groupe alcoxy en $C_1$ à $C_{12}$ ; $R^3$ est un groupe alkyle en $C_1$ à $C_{12}$ ; chacun de $R^4$ et $R^5$ est un atome d'hydrogène, un groupe hydrolysable ou un groupe contenant un alkylsilane avec un groupe alkyle ou un groupe aryle ; et $R^7$ est un groupe alkyle ou un groupe hydrolysable.

**6.** Caoutchouc styrène-butadiène polymérisé en émulsion selon la revendication 5, dans lequel : dans le groupe fonctionnel modifié contenant un atome d'azote, les groupes hydrolysables dans les formules (1) à (3) sont des groupes triméthylsilyle.

**7.** Caoutchouc styrène-butadiène polymérisé en émulsion selon l'une quelconque des revendications 4 à 6, dans lequel ; un agent modifiant utilisé pour introduire le groupe fonctionnel modifié contenant un atome d'azote contient un thiol et l'atome de soufre du groupe fonctionnel modifié est dérivé d'un thiol.

**8.** Caoutchouc styrène-butadiène polymérisé en émulsion selon l'une quelconque des revendications 1 à 7, ayant une masse moléculaire moyenne en nombre de 50 000 ou plus.

**9.** Caoutchouc styrène-butadiène polymérisé en émulsion selon l'une quelconque des revendications 1 à 8, ayant une distribution des masses moléculaires de plus de 2,5.

**10.** Composition de caoutchouc comprenant :

un composant de caoutchouc contenant le caoutchouc styrène-butadiène polymérisé en émulsion selon l'une quelconque des revendications 1 à 9 ; et

10 parties en masse ou plus de silice et 10 parties en masse ou plus de noir de carbone pour 100 parties en masse du composant de caoutchouc.

**11.** Pneumatique utilisant la composition de caoutchouc selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014040640 A1
- JP 2011246640 A


### Non-patent literature cited in the description


- **R.F, FEDORS.** *Polym. Eng. Sci.,* 1974, vol. 14 (2), 147-154